# EUROPEAN PATENT APPLICATION

(11) **EP 4 794 077 A1**
(43) Date of publication of application: **19.08.2026**
(21) Application number: 24923583.9
(22) Date of filing: 27.12.2024
(51) Int. Cl.: H01M 50/242, H01M 50/244

(54) **BATTERY AND ELECTRIC DEVICE**

(30) Priority: 05.02.2024 CN 202420283612 U
(71) Applicant: Contemporary Amperex Technology Co., Limited, Ningde, Fujian 352100 (CN)
(72) Inventor: ZHANG, Haidong, Ningde, Fujian 352100 (CN); QIN, Feng, Ningde, Fujian 352100 (CN)
(74) Representative: Ran, Handong
(86) International application number: PCT/CN2024/143220
(87) International publication number: WO 2025/167381

(57) **Abstract**

Disclosed in the present invention are a battery and an electric device. The battery comprises: a case; battery cell rows each comprising a plurality of battery cells arranged in a first direction, wherein the plurality of battery cell rows are stacked in a second direction to form a battery cell array and placed in the case; and an elongated component, wherein at least one elongated component is provided on the surface of the side of the battery cell rows facing away from a bottom plate of the case in a third direction, the elongated component extends in the first direction and is connected to at least one battery cell in the battery cell rows, and the first direction is perpendicular to both the second direction and the third direction.

## Description

### CROSS-REFERENCE TO RELATED APPLICATIONS

The present disclosure is based on and claims priority to Chinese Patent Application No. 202420283612.5, filed on February 05, 2024, and entitled "BATTERY AND ELECTRICAL APPARATUS", which is incorporated herein by reference in its entirety.

### TECHNICAL FIELD

The present disclosure relates to the technical field of batteries, and in particular, to a battery and an electrical apparatus using the battery to supply electrical energy.

### BACKGROUND

New energy batteries are increasingly more widely used in life and industry, for example, new-energy vehicles equipped with batteries have been widely used. In addition, batteries are increasingly used in fields such as energy storage.

In application scenarios such as integrating batteries into new-energy vehicles, how to improve a volumetric utilization rate of individual battery cells is a key focus of ongoing research and development in the industry.

### SUMMARY OF THE INVENTION

To address the aforementioned technical problems, the present disclosure provides a battery that can improve an overall volumetric utilization rate of the battery while taking into account the overall structural strength of the battery, as well as an electrical apparatus using the battery to supply electrical energy.

The present disclosure is implemented by the following technical solution.

One aspect of the present disclosure provides a battery, including: a box body; battery cell rows including a plurality of battery cells arranged in a first direction, the plurality of battery cell rows being stacked in a second direction to form a battery cell array and placed within the box body; and an elongated component, at least one elongated component being arranged on a surface of the battery cell rows on a side away from a bottom plate of the box body in a third direction, the elongated component extending in the first direction and being connected to at least one of the battery cells in the battery cell row, where the first direction, the second direction, and the third direction are perpendicular to one another.

The elongated component extending in an arrangement direction of the battery cells is arranged on a top surface of the battery cell row, and therefore, the battery's ability to withstand vibration and shock can be improved through the elongated component, thereby being capable of reducing a quantity of beams in the box body of the battery while maintaining the overall structural strength of the battery. This further helps improve the volumetric utilization rate of the battery cells and also helps reduce overall weight and cost of the battery.

In some embodiments, the battery cell includes a first shoulder and a second shoulder, the first shoulder and the second shoulder being located on a surface of a side of the battery cell having an electrode terminal and on both sides of the electrode terminal, and the elongated component being connected to the battery cell at the first shoulder and/or the second shoulder of the battery cell.

The elongated component is located on the surface of the side of the battery cell provided with the electrode terminal and on both sides of the electrode terminal, and therefore, the space around the electrode terminal in the battery cell row can be effectively utilized, which helps improve the mechanical strength of the battery to withstand vibration, shock, expansion, and the like without taking up the height space of the battery cell.

In some embodiments, in each of the battery cell rows, the respective first shoulders are connected in sequence, and the respective second shoulders are connected in sequence. The battery includes: the elongated component connected to the first shoulder of each of the battery cells in the battery cell row, and/or the elongated component connected to the second shoulder of each of the battery cells in the battery cell row.

The elongated components may be arranged on the side where the first shoulder or the second shoulder is located in the battery cell row, or the elongated components may be arranged on both the side where the first shoulder and the second shoulder are located in the battery cell. Therefore, the elongated components can be flexibly arranged according to requirements of battery weight, mechanical strength, and the like. Furthermore, the elongated component is connected to the shoulder (the first shoulder and/or the second shoulder) of each of the battery cells in the battery cell row, and therefore, it is capable of improving the ability of each of the battery cells in the battery cell row, and thus the entire battery cell row, to withstand vibration, shock, expansion, and the like.

In some embodiments, the plurality of battery cell rows include a first battery cell row and a second battery cell row adjacent to each other in the second direction, the first battery cell row and the second battery cell row being close to or in contact with each other in the second direction, the first battery cell row and the second battery cell row together forming a third shoulder, the third shoulder including the sequentially connected first shoulders of the first battery cell row and the sequentially connected second shoulders of the second battery cell row adjacent to the first battery cell row, the elongated component being connected to both the first shoulders and the second shoulders in the third shoulder.

The plurality of battery cell rows are arranged close to or in contact with each other, and therefore, it helps improve the volumetric utilization rate of battery cells in the battery. The elongated component is connected to the third shoulder formed by two adjacent battery cell rows in the second direction (i.e., the sequentially connected first shoulders and the sequentially connected second shoulders included in the third shoulder), and therefore, it is further capable of improving the ability of the battery cell rows, and thus the entire battery, to withstand vibration, shock, expansion, and the like.

In some embodiment, the connection includes bonding.

By bonding, the elongated component can be easily connected to the battery cell row. The operation is simple and time-saving, and it is less likely to damage the surface of the battery cell. This is capable of reducing the risk of leakage and electrical leakage caused by damage to the battery cell, and further capable of reducing the space occupied by mechanical connection components.

In each of the battery cells, sidewalls vertical in a third direction are formed at end edges of the first shoulder and the second shoulder at sides close to each other, and the sidewalls are respectively used to define a boundary of the first shoulder and the second shoulder.

The end edges of the first shoulder and the second shoulder at the sides close to each other have sidewalls that are vertical in the third direction, and therefore, the elongated component is capable of being easily aligned with the first shoulder and the second shoulder and mounted in a suitable position even without any additional positioning measure, which is capable of reducing adverse situations caused by misalignment of the elongated component.

In some embodiments, in the third direction, a height of the battery cell at the first shoulder and the second shoulder is less than a height of the battery cell at the electrode terminal.

The height of the battery cell at the first shoulder and the second shoulder is less than the height at the electrode terminal, and therefore, a height space between the first shoulder, the second shoulder, and a top surface of the electrode terminal can be effectively utilized, thereby being capable of suppressing an additional increase or an additionally increased amount in a height of the box body of the battery caused by the elongated component, which is beneficial for miniaturizing the battery.

In some embodiments, the box body includes a frame, beams extending in a same direction are provided in a space enclosed by the frame, and each of the battery cell rows is accommodated in the battery cell accommodating space enclosed by the frame and the beams.

The surface of the battery cell row is connected to the elongated component that can increase the mechanical strength, and therefore, it is capable of retaining only a small number of crossbeams and appropriately reducing a quantity of longitudinal beams while taking into account the overall mechanical strength of the battery. This helps improve the volumetric utilization rate of the battery cell and also helps reduce the overall weight and cost of the battery.

In some embodiments, the beams include a first beam and a second beam, the first beam and the second beam being arranged in parallel, and the elongated component includes a first elongated component, and two end portions of the first elongated component being connected to the first beam and the second beam respectively.

The two end portions of the first elongated component are respectively connected to two parallel beams in the frame, and therefore, the battery's ability to withstand vibration, shock, expansion, and the like is improved, especially the ability to withstand an expansion force of the battery cell in an extension direction of the first elongated component.

In some embodiments, the first elongated component includes a bead main body part and a bead connecting portion provided at at least one end of the bead main body part. The bead connecting portion includes a lapping portion and a connecting head, and the bead connecting portion is connected to one end of the bead main body part at the lapping portion, and connected to the first beam and/or the second beam at the connecting head.

The first elongated component is connected to the first beam and the second beam through the connecting head, and therefore, it is capable of reducing the connection strength, and reducing the risk of the first elongated component tearing due to stress concentration.

In some embodiments, the elongated component further includes a second elongated component that is different from the first elongated component, the first elongated component and the second elongated component extending in the same direction.

The second elongated component is also connected to the surface of the battery cell row, thus also improving the rigidity of the battery cell row and increasing the battery's resistance to vibration and impact. In addition, the elongated component may include the first elongated component and the second elongated component, and therefore, the mechanical strength requirements, overall battery weight requirements, cost requirements, and the like can be met by setting the two elongated components in different forms and flexibly combining them. This is beneficial to take into account some or all of the above three requirements in a simple way.

In some embodiments, the first elongated component and the second elongated component are made of different materials and/or in different dimensions.

By setting the first elongated component and the second elongated component to be made of different materials and/or in different dimensions, the overall weight of the elongated components can be reduced while taking the mechanical strength into account, thereby reducing the overall weight of the battery and also helping reduce the cost of the elongated components.

In some embodiments, the first elongated component and the second elongated component are arranged alternatively in the second direction, or the first elongated component and the second elongated component are arranged symmetrically about an axis of symmetry in the first direction.

Arranging the first elongated component and the second elongated component alternately in the second direction (the direction in which the battery cell rows are stacked sequentially) helps enhance the overall mechanical strength of the battery. Arranging the first elongated component and the second elongated component to be symmetric in the first direction (the direction in which the battery cells are arranged into the battery cell row) helps uniformly enhance the overall mechanical strength of the battery.

In some embodiments, the first elongated component includes an elongated component made of a steel strip.

The elongated component made of the steel strip has a high impact strength, tensile strength, and the like, which helps improve the mechanical strength of the battery to withstand vibration, impact, expansion, and the like.

In some embodiments, the surface of the first elongated component has an insulating film or insulating coating.

The surface of the first elongated component has the insulating film or insulating coating, and therefore, it is capable of being insulated relative to the first shoulder, the second shoulder, and the like of the battery cell.

In some embodiments, the second elongated component includes an elongated component made of a fiber-reinforced resin composite material.

The elongated component made of the fiber-reinforced resin composite material is advantageous in lightweight, which helps reduce the overall weight of the battery while maintaining its overall mechanical strength. In addition, the elongated component made of the fiber-reinforced resin composite material has an excellent tensile strength, which helps improve the mechanical strength of the battery to withstand the expansion force.

In some embodiments, the battery further includes a thermal management component, the thermal management component being located on at least one side of the battery cell and configured to perform heat exchange with the battery cell.

Therefore, it is capable of cooling the battery cell, enabling the battery cell to operate at a suitable temperature.

In some embodiments, the thermal management component located on one side of the battery cell close to the bottom plate in the third direction is configured to perform heat exchange with the battery cell.

The thermal management component is located on the bottom plate side, and therefore, it is capable of performing heat exchange with the battery cell to ensure that the battery cell operate at the suitable temperature. Moreover, the thermal management component occupies less space between the battery cells in the box body of the battery, thus helping improve a space utilization rate of the battery.

A second aspect of the present disclosure provides an electrical apparatus, where the electrical apparatus includes the battery provided in the first aspect of the present disclosure and configured to supply electric energy.

For the battery, since it is capable of improving the overall volumetric utilization rate while maintaining the overall structural strength of the battery, it consequently helps the electrical apparatus reduce the space allocated for arranging the battery, decrease the overall weight of the electrical apparatus, or increase the total energy of the battery used by the electrical apparatus so as to extend the charging interval of the electrical apparatus.

### Effect of the utility model

By means of the present disclosure, it is capable of improving the overall volumetric utilization rate of the battery while taking into account the overall structural strength of the battery, as well as the electrical apparatus using the battery to supply electrical energy.

### BRIEF DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the drawings:
FIG. 1 is a schematic structural diagram of a vehicle using a battery as a power source according to some embodiments of the present disclosure;
FIG. 2 is a schematic three-dimensional exploded diagram of a structure of a battery according to some embodiments of the present disclosure;
FIG. 3 is a schematic three-dimensional diagram of a battery cell according to some embodiments of the present disclosure;
FIG. 4 is a schematic planar diagram of a structure of a battery according to some embodiments of the present disclosure in a cover-removed state;
FIG. 5 is a schematic three-dimensional diagram of a frame of a battery according to some embodiments of the present disclosure;
FIG. 6 is a schematic three-dimensional diagram of a frame of a battery according to some other embodiments of the present disclosure;
FIG. 7 is a schematic three-dimensional diagram of a bead according to some embodiments of the present disclosure;
FIG. 8 is a schematic local three-dimensional diagram of a bead according to some embodiments of the present disclosure;
FIG. 9 is a schematic local three-dimensional diagram of a brace according to some embodiments of the present disclosure; and
FIG. 10 is a schematic local three-dimensional diagram of a brace according to some other embodiments of the present disclosure.

### List of reference numerals:

1000-Vehicle; 100-Battery; 100A-Battery pack; 200-Controller; 300-Motor;
101-Bottom plate; 102-Heat exchange plate;
103-Frame; 1031-First beam; 1032-Second beam; 1033-Border; 1034-Edge portion; 1035-Mounting hole; 1036-Third beam; 1037-Longitudinal beam; 1038-Mounting flange;
104-Battery cell; 1041-Battery cell large surface; 1042-Battery cell side surface; 1043-Battery cell bottom surface; 1044-Top cover; 1045-Electrode terminal; 1046-Exhaust valve; 1047-First shoulder; 1048-Second shoulder;
105-Connecting pipe; 1051-Connecting pipe port;
106-Busbar component;
107-Bead; 1071-Bead main body part; 1072-Bead connecting portion; 1072a-Lapping portion; 1072b-Connecting head; 1072c-Elongated hole portion; 1072d-Welding portion;
108-Brace; 1081-Brace end face;
109-BMS assembly; 110-High-voltage box assembly; 111-Electrical plug-in portion; 112-Cover; 1121-Mounting bolt; h1-Height at the shoulder; h2-Height at the electrode terminal; S-Battery cell accommodating space.

### DETAILED DESCRIPTION

Embodiments of the technical solutions of the present disclosure will be described in detail below in conjunction with the drawings. The following examples are only used to illustrate the technical solutions of the present disclosure more clearly, and are therefore used only as examples, and should not be used to limit the protection scope of the present disclosure.

Unless otherwise defined, all technical and scientific terms used herein have the same meanings as those commonly understood by those skilled in the art to which the present disclosure belongs. The terms used herein are merely for the purpose of describing specific embodiments, but are not intended to limit the present disclosure. The terms "include" and "have" and any variations thereof in the specification and the claims of the present disclosure as well as the above description of the drawings are intended to cover non-exclusive inclusions.

In the description of the embodiments of the present disclosure, the technical terms "first", "second", "third", and the like, are used only to distinguish between different objects and are not to be understood as indicating or implying a relative importance or implicitly specifying the number, particular order, or primary and secondary relationship of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the examples of the present disclosure, the term "and/or" is only an association relationship for describing associated objects, indicating that three relationships may exist. For example, A and/or B may represent three situations: A exists alone, both A and B exist, and B exists alone. In addition, the character "/" herein generally means that the associated objects before and after it are in an "or" relationship.

In the description of the embodiments of the present disclosure, the technical terms "length", "width", "thickness", "upper", "lower", "left", "right", "vertical", "horizontal", "top", "bottom", "inner", "outer", and the like indicate orientation or position relationships based on the orientation or position relationships shown in the drawings, and are intended only to facilitate and simplify the description of the embodiments of the present disclosure, but are not intended to indicate or imply that an apparatus or element referred to must have a particular orientation or be constructed, operated or used in a particular orientation, and therefore should not be construed as limiting the embodiments of the present disclosure.

In the description of the embodiments of the present disclosure, unless otherwise clearly specified and defined, technical terms "mount", "connected", "connect", "fix", and the like should be broadly understood. For example, the connection may be a fixed connection, a detachable connection, or an integrated connection, may be a mechanical connection or an electrical connection, or may be a direct connection, an indirect connection through an intermediate medium, an internal communication between two elements, or an interaction relationship between two elements. For those of ordinary skill in the art, the specific meanings of the above terms in the embodiments of the present disclosure can be understood according to specific situations.

In the description of the embodiments of the present disclosure, unless otherwise expressly specified and defined, the technical term "contact" shall be understood in a broad sense, either as direct contact, as contact across an intermediate medium layer, as contact between the two in contact that is substantially free of interaction force, or as contact with interaction force between the two in contact.

In the following, the present disclosure will be described in detail.

At present, new energy batteries are increasingly used in daily life and industry. The new energy batteries are not only applied in energy storage power supply systems such as water power, fire power, wind power, and solar power stations, but also widely applied in electric transportation tools, such as electric bicycles, electric motorcycles, and electric vehicles, as well as many fields such as aerospace.

In numerous application scenarios, including that of equipping batteries on new-energy vehicles, the volumetric utilization rate of battery cells within a battery has always been a major focus. The industry generally believes that the higher the volumetric utilization rate of a battery, the more battery cells can be accommodated per unit volume. Therefore, improving the volumetric utilization rate of batteries is a key focus of ongoing research and development in the industry.

In existing batteries, there is a structure in which a heat exchange plate is placed at the bottom of a battery cell to perform heat exchange with the battery cell. In this structure, in order to meet strength requirements of the battery to withstand vibration and impact, crossbeams and longitudinal beams are arranged in a box body of the battery, and the battery cells are configured in spaces separated by these crossbeams and longitudinal beams. However, such a structure results in the crossbeams and longitudinal beams occupying a large amount of space in the box body of the battery, thus squeezing the space available for arranging individual battery cells.

In addition, existing batteries also include structures that reduce the longitudinal beams in the box body of the battery and use heat exchange plates that are in contact with battery cell large surfaces. In such a structure, the large-area heat exchange plate enhances overall strength of the box body, thus meeting the strength requirements for the battery to withstand vibration and impact even with fewer longitudinal beams. However, such a structure results in the large-area heat exchange plate occupying a large amount of space in the box body of the battery, thus squeezing the space available for arranging individual battery cells.

In view of the above situation, how to further improve the volumetric utilization rate of battery cells while taking into account the overall strength of the battery is one of the technical issues to be solved by the present disclosure. Specifically, one of the technical issues to be addressed in the present disclosure is how to remove or reduce longitudinal beams inside a box body to further improve the volumetric utilization rate of a battery, while also taking into account the mechanical strength requirements of the battery to withstand vibration and impact.

The present disclosure addresses the problems existing in the prior art by proposing the following design concept: reducing the number of longitudinal beams in the battery to provide as much space as possible for arranging battery cells, and further fixing one or more elongated components on surfaces of the battery cells to enhance mechanical strength of a battery cell row to withstand vibration, impact, expansion, and deformation.

Based on such design concept, the present disclosure proposes a battery. The battery includes a box body, battery cell rows, and an elongated component. The battery cell row each includes a plurality of battery cells arranged in a first direction. The plurality of battery cell rows are stacked in a second direction to form a battery cell array and placed within the box body. At least one elongated component is arranged on a surface of the battery cell rows on a side away from a bottom plate of the box body in a third direction, and the elongated component extends in the first direction and is connected to at least one of the battery cells in the battery cell row. The first direction, the second direction, and the third direction are perpendicular to one another.

Arranging the elongated component can provide as much space as possible for arranging battery cells in an arrangement direction of the battery cells, making the most of the space inside the box body of the battery and helping improve the space utilization rate of the box body of the battery. Moreover, the elongated component extending in the arrangement direction of the battery cells is arranged on a top surface of the battery cell row, and therefore, the battery's ability to withstand vibration, shock, expansion, and deformation can be improved through the elongated component, thereby reducing a quantity of beams in the box body of the battery, and further helping improve the volumetric utilization rate of the battery cells.

It should be noted that the battery provided in the embodiments of the present disclosure may be used in, but not limited to, an energy storage power supply system, a vehicle, a ship, an aircraft, and other electrical apparatuses. For the battery, since it is capable of improving the overall volumetric utilization rate while maintaining the overall structural strength of the battery, it consequently helps the electrical apparatus reduce the space allocated for arranging the battery, decrease the overall weight of the electrical apparatus, or increase the total energy of the battery used by the electrical apparatus so as to extend the charging interval of the electrical apparatus.

The embodiments of the present application further provide an electrical apparatus including a battery configured to supply electric energy, and the electrical apparatus may be, but is not limited to, a mobile phone, a tablet, a notebook, an electric toy, an electric tool, a battery vehicle, an electric vehicle, a ship, a spacecraft, and the like. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

For the convenience of description in the following embodiment, an electrical apparatus being a vehicle 1000 according to an embodiment of the present disclosure is taken as an example for the description. Description is made in the following with reference to the accompanying drawings.

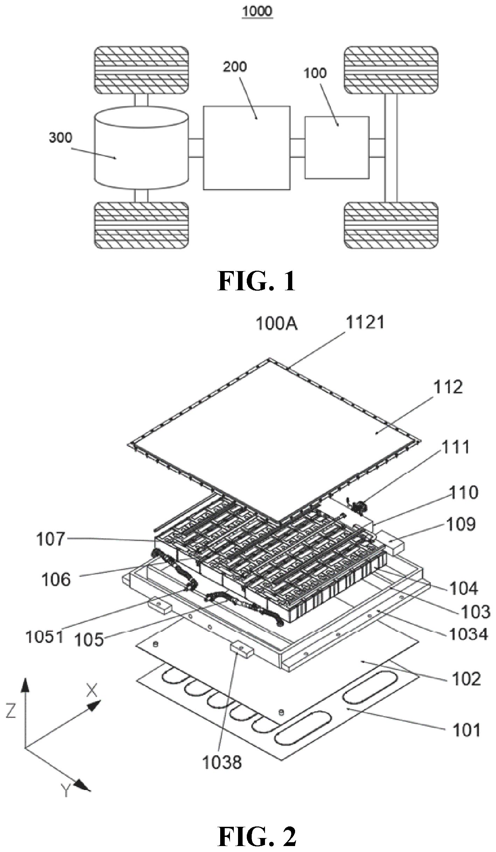

FIG. 1 is a schematic structural diagram of a vehicle 1000 according to some embodiments of the present disclosure. The vehicle 1000 may be a fuel vehicle, a gas vehicle, or a new-energy vehicle, and the new-energy vehicle may be an all-electric vehicle, a hybrid vehicle, an extended range electric vehicle, or the like. As shown in FIG. 1, the vehicle 1000 is provided with a battery 100 inside. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments, the battery 100 may not only be used as the operating power source for the vehicle 1000, but also as a driving power source for the vehicle 1000, to replace or partially replace fuel or natural gas to provide driving power for the vehicle 1000.

The battery mentioned in the embodiments of the present disclosure refers to a single physical module including a plurality of battery cells to provide a higher voltage and capacity. The plurality of battery cells may be in series or parallel or parallel-series connections with each other, where the parallel-series connection means that there are both series and parallel connections among the plurality of battery cells.

In some embodiments, the battery may be a battery module. The plurality of battery cells may be arranged and fixed to form a battery module.

In some embodiments, the battery may be a battery pack. The plurality of battery cells may be directly connected in series, in parallel, or in parallel-series, and then the entirety formed by the plurality of battery cells is accommodated in an accommodating space to be used as a battery pack. In addition, the battery pack may also be an entirety formed by connecting the plurality of battery cells in series, in parallel, or in parallel-series to form battery modules and then connecting the plurality of battery modules in series, in parallel, or in parallel-series, and then used as the battery pack. Definitely, the battery pack also includes a situation where there is only one battery module. In some of the embodiments described below, as shown in FIG. 1 and FIG. 2, an example of the battery 100 being a battery pack 100A will be illustrated.

The battery pack 100A may further include other structures, for example, may further include a busbar component 106 configured to implement electrical connection between a plurality of battery cells 104. In addition, the battery pack 100A may also include a heat exchange plate 102 configured to perform heat exchange with each of the battery cells 104.

In the embodiments of the present disclosure, the battery cell may be a secondary battery, and the second battery refers to that the battery cell can be used continuously after an active material of the battery cell is activated by charging.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, and the like, which is not limited in the embodiments of the present disclosure.

Although not shown, the battery cell 104 generally includes an electrode assembly. The electrode assembly includes a positive electrode, a negative electrode, and a spacer. During the charging and discharging of the battery cell, active ions (such as lithium ions) are intercalated and deintercalated back and forth between the positive electrode and the negative electrode. The spacer is arranged between the positive electrode and the negative electrode, and functions to prevent a short circuit between the positive electrode and the negative electrode while enabling the active ions to pass through.

In some embodiments, the electrode assembly is provided with tabs (not shown), and the tabs can conduct current out of the electrode assembly. The tabs include a positive tab and a negative tab.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

In some embodiments, the shell is provided with at least one electrode terminal, and the electrode terminal is electrically connected to a tab. The electrode terminal can be directly connected to the tab, or can also be indirectly connected to the tab through an adapter. The electrode terminal may be arranged on an end cover, or may alternatively be arranged on a case.

As an example, the battery cell may be a cylindrical battery cell, a prismatic battery cell, a pouch cell, or a battery cell in another shape. The prismatic battery cell includes a square battery cell, a blade battery cell, and a polygon prism battery. For example, the polygon prism battery may be a hexagonal prism battery or the like, which is not specifically limited in the present disclosure.

In some embodiments, the box body of the battery pack may be a part of a vehicle chassis structure. For example, a part of the box body may become at least a part of a floor of the vehicle, or a part of the box body may become at least a part of a cross beam and a longitudinal beam of the vehicle.

Some embodiments of the present disclosure are described in detail below with reference to FIG. 2 to FIG. 10.

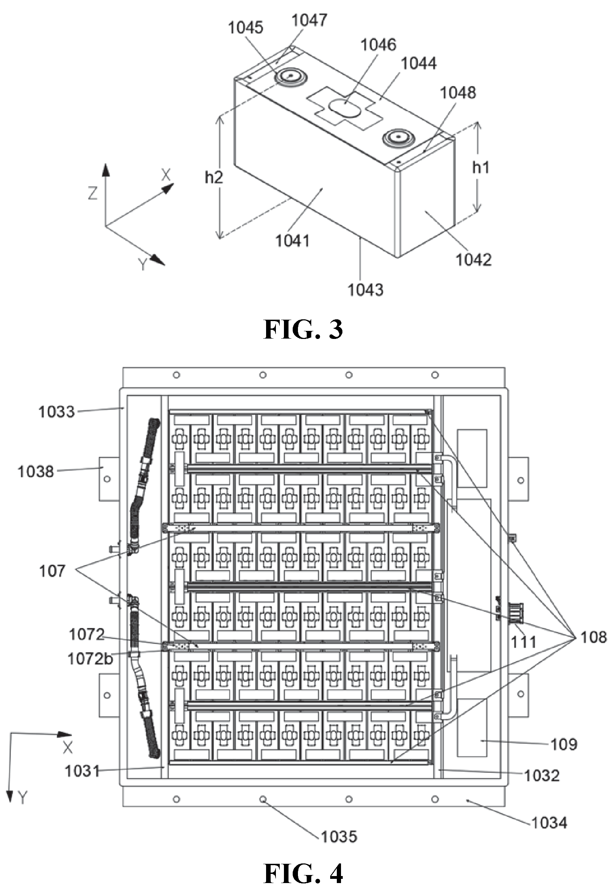

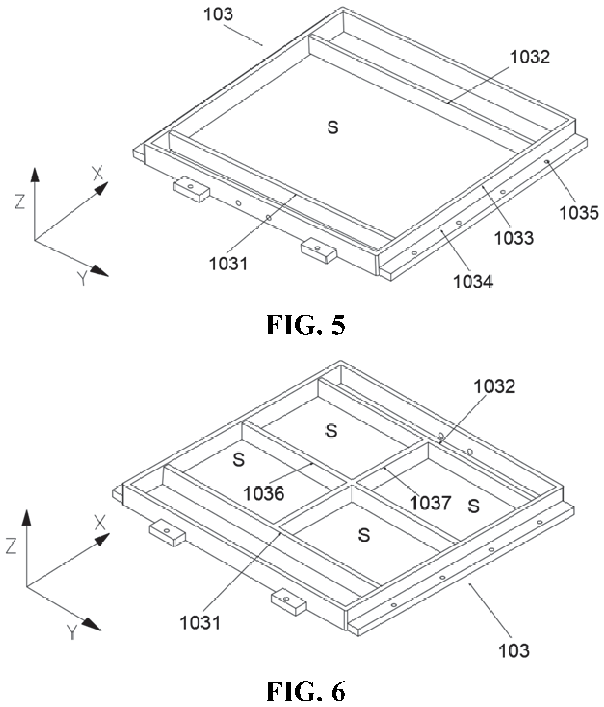

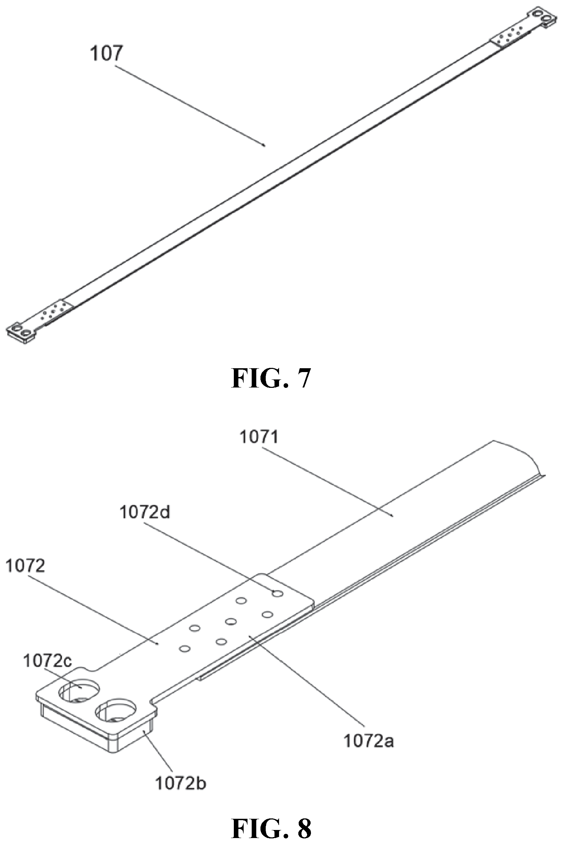

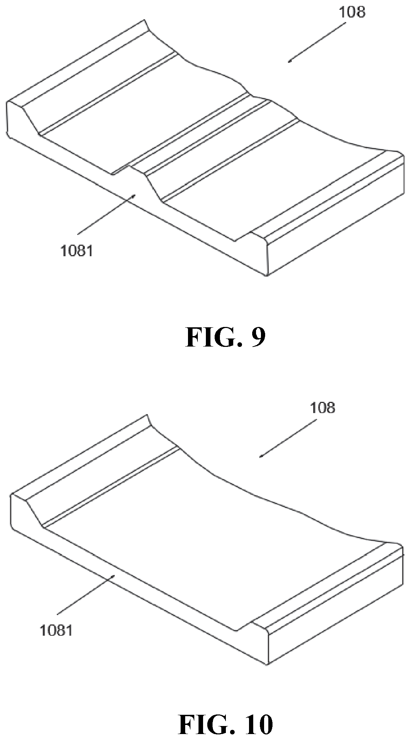

FIG. 2 is a schematic three-dimensional exploded diagram of a structure of a battery according to some embodiments of the present disclosure; FIG. 3 is a schematic three-dimensional diagram of a battery cell according to some embodiments of the present disclosure; FIG. 4 is a schematic planar diagram of a structure of a battery according to some embodiments of the present disclosure in a cover-removed state; FIG. 5 is a schematic three-dimensional diagram of a frame of a battery according to some embodiments of the present disclosure; FIG. 6 is a schematic three-dimensional diagram of a frame of a battery according to some other embodiments of the present disclosure; FIG. 7 is a schematic three-dimensional diagram of a bead according to some embodiments of the present disclosure; FIG. 8 is a schematic local three-dimensional diagram of a bead according to some embodiments of the present disclosure; FIG. 9 is a schematic local three-dimensional diagram of a brace according to some embodiments of the present disclosure; and FIG. 10 is a schematic local three-dimensional diagram of a brace according to some other embodiments of the present disclosure.

As shown in FIG. 2 and FIG. 3, the battery pack 100A includes a box body, a battery cell row, and an elongated component. The battery cell row includes a plurality of battery cells 104 arranged in a first direction, and the plurality of battery cell rows are stacked in a second direction to form a battery cell array and placed inside the box body. At least one elongated component is arranged on a surface of the battery cell rows on a side away from a bottom plate of the box body in a third direction Z. The elongated component extends in the first direction X and is connected to at least one battery cell 104 in the battery cell row. The first direction X, the second direction Y, and the third direction Z are perpendicular to one another.

The box body is configured to accommodate the battery cell array formed by the plurality of battery cells arranged in the first direction and the second direction, and generally includes an accommodating space, and the accommodating space can be enclosed by a bottom plate, a cover, and the like. In some embodiments, as shown in FIG. 2, the box body includes a frame 103, and the space enclosed by the frame 103 is a battery cell accommodating space S.

In some embodiments of the present disclosure, for ease of description, the first direction, the second direction, and the third direction are set, and the first direction, the second direction, and the third direction are directions intersecting one another. In the embodiments shown in FIG. 2 to FIG. 6, illustration is made with examples where the first direction, the second direction, and the third direction are directions intersecting one another perpendicularly, but those skilled in the art should understand that the embodiments of the present disclosure are not limited to the case where the three directions intersect one another perpendicularly. For ease of illustration, as indicated by arrows in FIG. 2 and FIG. 3, a direction of an arrow X is taken as the first direction, a direction of an arrow Y is taken as the second direction, and a direction of an arrow Z is taken as the third direction.

In addition, in the embodiments shown in FIG. 2 to FIG. 6, as a specific example, the direction pointed to by the arrow Z is a top direction (which is also a direction away from the bottom plate 101), sometimes also called "above", and the direction opposite to the top direction in the second direction Z is a bottom direction, sometimes also called "below".

As shown in FIG. 2 and FIG. 3, at least one elongated component is arranged on a surface of the battery cell rows on a side away from a thermal management component in the third direction Z. The elongated component extends in the first direction X and is connected to at least one battery cell 104 in the battery cell row.

Specifically, at least one elongated component is arranged on a surface of the battery cell rows on a side away from a bottom plate of the box body in a third direction Z. The elongated component extends in the first direction X and is connected to at least one battery cell 104 in the battery cell row.

As shown in FIG. 2, the bottom plate 101 is located at the bottom of the battery pack 100A and serves to enclose or support the frame 103 of the battery pack 100A from below (described later); it also serves to protect the heat exchange plate 102. Although not explicitly illustrated, the bottom plate 101 is mounted to an edge portion 1034 of the frame 103 at its edge, for example by means of threaded fastening. When using a threaded fastening method, the edge portion 1034 has several mounting holes 1035 opened to facilitate fastening connection with the bottom plate 101. The bottom plate 101 can be made of, for example, metal, resin, or another suitable material.

Referring to FIG. 3, the battery cell 104 will be described in detail using a square battery as an example. As shown in FIG. 3, each of the battery cells 104 includes a battery cell large surface 1041, a battery cell side surface 1042, a battery cell bottom surface 1043, and a top cover 1044. On the top cover 1044, the two electrode terminals 1045 are exposed to the outside. An exhaust valve 1046 is arranged between the two electrode terminals 1045 on the top cover 1044. On a top surface side of the battery cell 104, a first shoulder 1047 and a second shoulder 1048 are arranged at a position away from the electrode terminal 1045 (the two shoulders will be described later). In addition, as shown in FIG. 2 and FIG. 4, a busbar component 106 is provided on the top surface of the battery cell 104 to electrically connect the electrode terminals 1045 of adjacent battery cells 104. Here, the short strip-shaped busbar component 106 is just an example, and the busbar component may also take other forms.

The shape of the battery cell 104 is not limited to the square box shape described above. Other battery shapes, such as cylindrical batteries and prismatic batteries, are also applicable to the present disclosure.

In addition, as shown in FIG. 2 and FIG. 4, in the box body formed by the frame 103, in addition to the plurality of battery cells 104 mentioned above, there is also a Battery Management System (BMS) component 109 configured to monitor battery status and interact with an electrical apparatus, a high-voltage box assembly 110 configured to connect the voltage provided by the plurality of battery cells 104 to the electrical apparatus and/or charge the plurality of battery cells 104 from a charging device, and an electrical plug-in portion 111 including a high-voltage connection port and a low-voltage connection port.

Additionally, as shown in FIG. 2, the battery also has a cover 112, and the cover 112 is configured to close, from the above, the box body formed by the frame 103. The cover 112 may be fixedly connected to the frame 103 by mounting bolts 1121, thereby forming a shell of the battery pack 100A with the cover 112, the frame 103, and the bottom plate 101.

As shown in FIG. 2 and FIG. 4, the battery pack 100A further includes an elongated component, and the elongated component extends in the first direction X (which is also a direction in which the battery cells 104 are arranged into a battery cell row). The elongated component may be configured as a strip with a certain cross-section. Here, the cross-section may be a triangle, a quadrilateral such as a rectangle and a square, or a polygon (such as a shape with a protrusion in the middle shown in FIG. 9, or a shape with an overall "U" shape shown in FIG. 10). It may be designed according to specific circumstances.

Here, an elongated component may be a single elongated component or several elongated components. When there are several elongated components, these elongated components may be of the same type, or they may be of two or more types with slight differences. In some embodiments of the present disclosure, the elongated components may be classified into two types of elongated components with different forms, which will be described in detail later.

As shown in FIG. 2 and FIG. 4, the elongated component overlaps with at least one battery cell in the battery cell row in the third direction Z. In the overlapping region, the elongated component is connected to the at least one battery cell. Here, the region where the battery cell overlaps with the elongated component may be located on the same side as the electrode terminal 1045, as shown in FIG. 2 and FIG. 4, or the region may be located on a side without the electrode terminal 1045. For example, when the battery cells 104 are arranged with the large surfaces of the battery cells 104 facing the third direction Z, the elongated component may overlap with the battery cell side surface 1042. Additionally, as shown in FIG. 2 to FIG. 4, the region where the elongated component overlaps with each of the battery cells 104 is located at a position that avoids the electrode terminal 1045 and the exhaust valve 1046.

In addition, although the elongated component has an overlapping region with each of the battery cells 104 in the battery cell row, it may be connected to only part of the battery cells 104 in the battery cell row; for example, it may be connected to several battery cells 104 with a certain number of battery cells 104 spaced therebetween. However, from the perspective of improving the mechanical strength of the battery cell row to withstand vibration and impact, it is preferable that the elongated component is connected to each of the battery cells 104 with which it overlaps.

The elongated component extending in an arrangement direction of the battery cells is arranged on the top surface of the battery cell row, and therefore, the battery's ability to withstand vibration and shock can be improved through the elongated component, thereby being capable of reducing a quantity of beams in the box body of the battery while maintaining the overall structural strength of the battery. This further helps improve the volumetric utilization rate of the battery cells and also helps reduce overall weight and cost of the battery.

In some embodiments, the battery further includes a thermal management component, the thermal management component being located on at least one side of the battery cell 104 and configured to perform heat exchange with the battery cell 104.

In some embodiments, the thermal management component located on one side of the battery cell 104 close to the bottom plate 101 in the third direction Z is configured to perform heat exchange with the battery cell 104.

Thermal management components are typically configured to cool or heat individual battery cells. The thermal management component may adopt a variety of specific structures; for example, it may be of a plate type, a structure with built-in flow channels for a heat exchange medium, an integrated type, or a split type. In one specific embodiment, the thermal management component includes the heat exchange plate 102 as shown in FIG. 2. The following description uses the heat exchange plate 102 as an example, but the thermal management components should be understood to include, but are not limited to, the heat exchange plate 102.

Optionally, the battery pack 100A includes a frame 103 as a box body, a plurality of battery cell rows within a space enclosed by the frame 103, and a heat exchange plate 102 located between battery cells and a bottom plate 101. The heat exchange plate 102 is located at the bottom of the frame 103 (on one side of the frame 103 in the third direction Z) as the box body and is fixed to the frame 103.

As shown in FIG. 2, the heat exchange plate 102 is arranged above the bottom plate (in the direction indicated by the arrow Z). The heat exchange plate 102 is configured to perform heat exchange with each of the battery cells above it (in the direction indicated by the arrow Z). Of course, the heat exchange plate 102 may also be located below the bottom plate 101. In addition, the heat exchange plate 102 may also be arranged between adjacent battery cells, for example, in contact with the large surface (the surface with the largest area in the battery cell) of the battery cell. Heat exchange plates may also be arranged on both the bottom surface side and the large surface side of the battery.

In some embodiments, the interior of the heat exchange plate 102 forms a heat exchange medium flow path for the flow of the heat exchange medium. The heat exchange medium flow path may be in communication with a heat exchange medium supply source or another heat exchange medium flow path through a connecting pipe port 1051 of a connecting pipe 105 as shown in FIG. 2 and FIG. 3.

The heat exchange medium mentioned in the embodiments of the present disclosure is a fluid used for heat exchange with battery cells within a pipeline. The heat exchange refers to transfer of heat by utilizing a temperature difference between the heat exchange medium and a surrounding environment of each of the battery cells, thereby reducing the temperature difference between the heat exchange medium and the battery cell. It may be used to heat up or cool down the battery cell. In some embodiments of the present disclosure, the case of adjusting the temperature of a battery cell by utilizing the temperature difference between a liquid heat exchange medium and the surrounding environment of each of the battery cells is illustrated. In some embodiments, the heat exchange medium is referred to as a coolant or refrigerant and is mainly configured to cool the battery cells. As a coolant, a suitable coolant may be selected according to the specific situation. Specific examples include ethylene glycol solutions and water.

In addition, in the embodiments shown in FIG. 2 and FIG. 4, the plurality of battery cells 104 are arranged with large surfaces of the battery cells 104 facing the first direction X and their sides facing the second direction Y. However, the battery cells 104 may also be arranged in other directions. For example, the large surfaces of the battery cells 104 may face the second direction Y and their sides may face the first direction X. Alternatively, the battery cells 104 may be arranged with their large surfaces (e.g., large surfaces of cylindrical batteries) facing the second direction Z.

All the battery cells 104 are bonded to the heat exchange plate 102, for example, by thermally conductive structural adhesive. This allows for the fixation of each individual battery cell.

The heat exchange plate 102 is bonded and fixed to the bottom plate 101 by thermally conductive structural adhesive or the like. This allows a relative position of the heat exchange plate 102 to the bottom plate 101 to be fixed, and it is also beneficial for heat transfer between the heat exchange plate 102 and the bottom plate 101. Here, as a thermally conductive structural adhesive, commercially available polyurethane thermally conductive structural adhesives, thermally conductive silicone, and the like may be used.

The heat exchange plate 102 may be fastened or welded to the frame 103 (described later) from below, for example, by fastening to a mounting flange 1038 of the frame 103 with bolts or the like. In addition, although not explicitly shown in the figure, the heat exchange plate 102 may also be fastened or welded to crossbeams (such as a first beam 1031 and a second beam 1032 described later) within the frame.

A plurality of battery cells 104 are arranged above the heat exchange plate 102, and these battery cells 104 are arranged into one or more battery cell rows. FIG. 2 and FIG. 4 show an example of arranging into 6 battery cell rows. However, the number of battery cell rows is not limited to 6, and it may be less than 6, such as 2, 3, or 4, or more than 6.

The heat exchange plate 102 is located on the bottom plate 101, and therefore, it is capable of alleviating the situation where the heat exchange plate 102 occupies the space for arranging the battery cells 104, and is capable of providing as much space as possible for arranging the battery cells 104 in the arrangement direction of the battery cells 104.

The elongated component extending in an arrangement direction of the battery cells is arranged on the surface of the battery cell row, and therefore, the battery cell row's ability to withstand vibration, shock, expansion, and deformation can be improved through the elongated component, thereby being capable of reducing a quantity of beams in the box body of the battery while maintaining the overall structural strength of the battery. This helps improve the volumetric utilization rate of the battery cells and also helps inhibiting the overall weight and cost of the battery.

In some embodiments, as shown in FIG. 2 to FIG. 4, the battery cell 104 includes a first shoulder 1047 and a second shoulder 1048. The first shoulder 1047 and the second shoulder 1048 are located on a surface of a side of the battery cell 104 having an electrode terminal 1045 and on both sides of the electrode terminal 1045, and the elongated component is connected to the battery cell 104 at the first shoulder 1047 and/or the second shoulder 1048 of the battery cell 104.

Here, the first shoulder 1047 and the second shoulder 1048 are two regions on the top surface of the battery cell 104. The two regions may be arranged symmetrically about a central axis of the battery cell 104 in the third direction Z, or they may be arranged offset relative to the central axis. In addition, the two regions may also have different shapes and/or sizes.

As shown in FIG. 3, the first shoulder 1047 and the second shoulder 1048 may be formed by arranging a top cover 1044. Specifically, the top cover 1044 is arranged such that its length in the second direction Y is shorter than a distance in the second direction Y between the two battery cell side surfaces 1042 of the battery cell 104. With the top cover 1044 assembled on the top surface of the battery cell 104, the top surface of the battery cell 104 is exposed on both sides of the top cover 1044. These two exposed top surfaces of the battery cell 104 may serve as the first shoulder 1047 and the second shoulder 1048.

The lengths of the first shoulder 1047 and the second shoulder 1048 in the second direction Y are configured to match the arranged elongated component so that the elongated component is capable of being reliably in surface-contact with the surfaces of the first shoulder 1047 and the second shoulder 1048. As a specific example, the lengths of the first shoulder 1047 and the second shoulder 1048 in the second direction Y are both greater than or substantially the same as the width of the elongated component in the second direction Y; or, the lengths of the first shoulder 1047 and the second shoulder 1048 in the second direction Y are both greater than or substantially the same as approximately half the width of the elongated component in the second direction Y. Of course, the lengths of the first shoulder 1047 and the second shoulder 1048 in the second direction Y may also be about half the width of the elongated component in the second direction Y. In this case, the elongated component may be arranged with a slight gap between the battery cell rows, so that the elongated component is also capable of being in contact with the surfaces of the first shoulder 1047 and the second shoulder 1048.

Furthermore, the first shoulder 1047 and the second shoulder 1048 are located on both sides of the electrode terminal 1045, and therefore, the elongated component can be placed in a space formed by a height difference between the first shoulder 1047, the second shoulder 1048, and the top surface of the electrode terminal 1045 (the surface facing away from the bottom plate 101 in the third direction Z). This reduces the possibility of increasing the height of the battery pack 100A due to the elongated component, or it may basically not increase the height of the battery pack 100A.

The elongated component is located on the surface of the side of the battery cell 104 provided with the electrode terminal and on both sides of the electrode terminal 1045, and therefore, the space around the electrode terminal 1045 in the battery cell row can be effectively utilized, which helps improve the mechanical strength of the battery to withstand vibration, shock, expansion, and the like without taking up the height space of the battery cell.

Additionally, it should be noted that the terms "first" and "second" in the first shoulder 1047 and the second shoulder 1048 are only used to distinguish between the two shoulders. For example, for each of the battery cells 104 in FIG. 4, the shoulder on the upper side in the second direction Y is referred to as the first shoulder, and the shoulder on the other side is referred to as the second shoulder; of course, vice versa.

In some embodiments, as shown in FIG. 2 and FIG. 4, in each of the battery cell rows, the respective first shoulders 1047 are connected in sequence, and the respective second shoulders 1048 are connected in sequence. The battery 100 (battery pack 100A) includes: the elongated component connected to the first shoulder 1047 of each of the battery cells 104 in the battery cell row, and/or the elongated component connected to the second shoulder 1048 of each of the battery cells 104 in the battery cell row.

As shown in FIG. 2 and FIG. 4, for a column of battery cell rows, a first shoulder region is formed on one side by a plurality of first shoulders 1047 connected in sequence, and a second shoulder region is formed on the other side by a plurality of second shoulders 1048 connected in sequence. FIG. 2 and FIG. 4 show a plurality of columns of battery cell rows, and therefore, there are a plurality of first shoulder regions and a plurality of second shoulder regions. elongated components may be arranged for a portion or all of the plurality of first shoulder regions, or for a portion or all of the plurality of second shoulder regions, or for both the first shoulder region and the second shoulder region. The regions for arranging the elongated components and the numbers of elongated components to be arranged should be determined appropriately based on specific circumstances (such as the expected weight of the battery pack 100A, the required strength, and the usage environment of the battery pack 100A).

In addition, for the first shoulder region and/or the second shoulder region where the elongated component is arranged, the elongated component is in surface contact with and connected to all shoulders in the shoulder region.

The elongated components may be arranged on the side where the first shoulder 1047 or the second shoulder 1048 is located in the battery cell row, or the elongated components may be arranged on both the side where the first shoulder 1047 and the second shoulder 1048 are located in the battery cell. Therefore, the elongated components can be flexibly arranged according to requirements of battery weight, mechanical strength, and the like. Furthermore, the elongated component is connected to the shoulder (the first shoulder 1047 and/or the second shoulder 1048) of each of the battery cells 104 in the battery cell row, and therefore, it is capable of improving the ability of each of the battery cells 104 in the battery cell row, and thus the entire battery cell row, to withstand vibration, shock, expansion, and the like.

In some embodiments, as shown in FIG. 2 and FIG. 4, the battery 100 (battery pack 100A) includes a plurality of battery cell rows stacked in the second direction Y. The plurality of battery cell rows include a first battery cell row and a second battery cell row that are adjacent to each other in the second direction Y, and the first battery cell row and the second battery cell row are close to or in contact with each other in the second direction Y. The first battery cell row and the second battery cell row together form a third shoulder, and the third shoulder includes sequentially connected first shoulders 1047 of the first battery cell row and sequentially connected second shoulders 1048 of the second battery cell row adjacent to the first battery cell row. The elongated component is connected to both the first shoulders 1047 and the second shoulders 1048 in the third shoulder.

Specifically, in the battery pack 100A shown in FIG. 2 and FIG. 4, a plurality of battery cells 104 are arranged into a battery cell row in the first direction X, and a plurality of columns of battery cell rows are stacked in the second direction Y. To improve the volumetric utilization rate of battery cells, adjacent battery cells 104 in each of the battery cell rows are in close contact with each other. In the specific examples shown in FIG. 2 and FIG. 4, the adjacent battery cell large surfaces 1041 are in contact with each other. Moreover, adjacent battery cell rows are also in close contact with each other. In the specific examples shown in FIG. 2 and FIG. 4, the adjacent battery cell side surfaces 1042 are in contact with each other. This allows for full utilization of the space in the battery pack 100A used for battery arrangement, thereby improving the utilization rate. It should be noted that the contact between adjacent battery cells 104 and between adjacent battery cell rows may be direct contact or contact via spacers. In addition, adjacent battery cells 104 may be bonded to each other using adhesives, double-sided tape, and the like. For example, in the examples shown in FIG. 2 and FIG. 4, the battery cell large surfaces 1041 in the battery cell rows may be bonded to each other, and every two adjacent battery cell rows in the second direction Y may be bonded to each other (the battery cell side surfaces 1042 may be bonded to each other).

Between these closely arranged adjacent battery cell rows, a third shoulder is formed by the first shoulder 1047 (or the first shoulder region) and the second shoulder 1048 (or the second shoulder region) being abutted. The third shoulder forms a recessed space relative to the top cover 1044 adjacent to it on both sides, and the elongated component may be arranged in the recessed space and in contact with and connected to a bottom plane of the recessed space.

Alternatively, adjacent battery cell rows may not be in close contact, but rather have some gaps between them. In this case, a third shoulder with a wider dimension in the second direction Y may be provided to accommodate a wider elongated component. The elongated component is in surface contact with and connected to the first shoulder 1047 (or the first shoulder region) and the second shoulder 1048 (or the second shoulder region) of the third shoulder portion, which are opposed to each other with a gap therebetween.

The plurality of battery cell rows are arranged close to or in contact with each other, and therefore, it helps improve the volumetric utilization rate of battery cells in the battery. The elongated component is connected to the respective sequentially connected first shoulders 1047 and the respective sequentially connected second shoulders 1048 of the two adjacent battery cell rows, and therefore, it is further capable of improving the ability of the battery cell rows, and thus the entire battery, to withstand vibration, shock, expansion, and the like.

In some embodiment, the connection between the elongated component and the battery cell includes bonding.

The elongated component may be bonded to the first shoulder 1047 and/or the second shoulder 1048, for example, by an adhesive. Regarding adhesives, commercially available structural adhesives such as polyurethane structural adhesives, acrylic structural adhesives, and epoxy structural adhesives may be used, or other suitable adhesives may be employed. Alternatively, the elongated component may also be bonded together using double-sided tape.

By bonding, the elongated component can be easily connected to the battery cell row. The operation is simple and time-saving, and it is less likely to damage the surface of the battery cell. This is capable of reducing the risk of leakage and electrical leakage caused by damage to the battery cell, and further capable of reducing the space occupied by mechanical connection components.

In some embodiments, as shown in FIG. 2 to FIG. 4, in each of the battery cells 104, sidewalls vertical in a third direction are formed at end edges of the first shoulder 1047 and the second shoulder 1048 at sides close to each other, and the sidewalls are respectively used to define a boundary of the first shoulder 1047 and the second shoulder 1048.

Specifically, as shown in FIG. 3, the first shoulder 1047 and the second shoulder 1048 are located on both sides of the top cover 1044, and therefore, the sidewall that is formed by the end edge of the top cover 1044 and is vertical in the third direction Z is formed at the boundary between the first shoulder 1047, the second shoulder 1048, and the top cover 1044. The boundaries of the first shoulder 1047 and the second shoulder 1048 are capable of being easily determined through the sidewall, thereby making it easy to align and mount the elongated component with the first shoulder 1047, the second shoulder 1048, and the third shoulder formed by assembling the first shoulder 1047 and the second shoulder 1048. Of course, instead of providing a top cover 1044 that forms a clear boundary structure with the first shoulder 1047 and the second shoulder 1048 (e.g., a sidewall vertical in the third direction) on the top surface of the battery cell 104, the positions of the first shoulder 1047 and the second shoulder 1048 may be determined by using the electrode terminals 1045 on the surface of the battery cell 104 and markings additionally provided on the surface of the battery cell 104.

The end edges of the first shoulder 1047 and the second shoulder 1048 at the sides close to each other have sidewalls that are vertical in the third direction, and therefore, the elongated component is capable of being easily aligned with the first shoulder 1047 and the second shoulder 1048 and mounted in a suitable position even without any additional positioning measure, which is capable of reducing adverse situations caused by misalignment of the elongated component.

In some embodiments, as shown in FIG. 3, in the third direction Z, a height h1 of the battery cell 104 at the first shoulder 1047 and the second shoulder 1048 is less than a height h2 of the battery cell 104 at the electrode terminal 1045.

FIG. 3 shows the height h1 at the second shoulder 1048 and the height h2 at the electrode terminal 1045. Here, since the battery cell 104 has the same height in the third direction Z at the first shoulder 1047 and the second shoulder 1048, the height at the first shoulder 1047 is omitted. In addition, the heights h1 and h2 shown in FIG. 3 may be measured using a vernier caliper at a temperature of 25°C.

A thickness of the elongated component (the dimension in the third direction Z) may be designed based on a difference between height h1 and height h2. For example, the thickness of the elongated component may be less than or equal to the difference between the height h1 and the height h2, or may be slightly greater than the difference between the height h1 and the height h2. Regarding the thickness of the elongated component, as long as it is capable of achieving the function of strengthening mechanical strength and does not cause a significant increase in the height of the battery pack 100A, it can be determined according to the specific circumstances.

The height h1 of the battery cell 104 at the first shoulder 1047 and the second shoulder 1048 is less than the height h2 at the electrode terminal 1045, and therefore, a height space between the first shoulder 1047, the second shoulder 1048, and a top surface of the electrode terminal 1045 can be effectively utilized, thereby being capable of suppressing an additional increase or an additionally increased amount in a height of the box body of the battery caused by the elongated component, which is beneficial for miniaturizing the battery.

In some embodiments, as shown in FIG. 2, FIG. 4, and FIG. 5, the box body of the battery 100 (battery pack 100A) includes a frame 103, beams extending in a same direction are provided in a space enclosed by the frame 103, and each of the battery cell rows is accommodated in the battery cell accommodating space S enclosed by the frame 103 and the beams.

In FIG. 2, FIG. 4, and FIG. 5, beams extending entirely in the second direction Y are arranged in the space enclosed by the frame 103. These beams (specifically, a first beam 1031 and a second beam 1032, sometimes also referred to as "crossbeams") and a border 1033 of the frame 103 enclose the battery cell accommodating space S. In the embodiments shown in FIG. 2, FIG. 4, and FIG. 5, two beams are shown to enclose a battery cell accommodating space S, and all battery cells 104 are arranged in the battery cell accommodating space S and are bonded to the heat exchange plate 102 or the bottom plate 101. However, the number of beams is not limited to two, and there may be one, three, or more beams. There may not be one battery cell accommodating space S enclosed by the beams and the frame 103, and there may be two or more spaces. All the battery cells 104 are arranged in different regions of the battery cell accommodating spaces S. The battery cells 104 arranged in the same battery cell accommodating space S may be connected to form a battery module. The battery modules located in different battery cell accommodating spaces S form a battery pack 100A.

In addition, depending on the volume, weight, and the like of the battery pack 100A, as shown in FIG. 6, it is also possible to add beams (e.g., a third beam 1036, a longitudinal beam 1037) in the frame 103 that are parallel to and/or intersect with the beams extending in the same direction (e.g., the first beam 1031 and the second beam 1032 as crossbeams). As shown in FIG. 6, with the first beam 1031, the second beam 1032, the third beam 1036, and the longitudinal beam 1037 provided, four battery cell accommodating spaces S are formed by division, and the battery cell rows formed by the battery cells 104 may be arranged in these spaces, respectively.

Alternatively, if a mounting point is provided between the two crossbeams (e.g., a position for mounting the battery pack 100A to the electrical apparatus), a beam (e.g., a longitudinal beam) that intersects with the beam (e.g., the crossbeam) extending in the same direction may be added as needed.

The surface of the battery cell row is connected to the elongated component that can increase the mechanical strength, and therefore, it is capable of appropriately reducing the quantity of beams (e.g., the longitudinal beam) while taking into account the overall mechanical strength of the battery. This helps improve the volumetric utilization rate of the battery cell and also helps reduce the overall weight and cost of the battery.

In some embodiments, the beams include a first beam 1031 and a second beam 1032, the first beam 1031 and the second beam 1032 being arranged in parallel, and the elongated component includes a first elongated component, and two end portions of the first elongated component being connected to the first beam 1031 and the second beam 1032 respectively.

In addition to the beams including the first beam 1031 and the second beam 1032, a third beam 1036 parallel to the first beam 1031 and the second beam 1032 may be added between the first beam 1031 and the second beam 1032. In this case, the two end portions of the first elongated component may be connected to any two of the first beam 1031, the second beam 1032, and the third beam 1036 as needed.

In some embodiments of the present disclosure, as shown in FIG. 2 and FIG. 4, the battery pack 100A includes a plurality of elongated components, and these elongated components may be of the same type. In the example shown in FIG. 2 and FIG. 4, a bead 107 is used as the first elongated component. The description is provided below with the beam 107 as an example. Two end portions of the bead 107 are connected to the first beam 1031 and the second beam 1032, respectively. As a way of connecting to the beam, the connection may be achieved by means of bolts or rivets.

The battery pack 100A may include one bead 107 or a plurality of beads 107. From the perspective of improving the overall mechanical strength of the battery to withstand vibration, impact, expansion, and the like, the bead 107 may be arranged for all the third shoulders located between adjacent battery cell rows. From the perspective of appropriately suppressing the overall weight of the battery, the bead 107 may be arranged for a portion of the third shoulders instead of all of them.

The two end portions of the bead 107 are respectively connected to the first beam 1031 and the second beam 1032 arranged in parallel in the frame 103, and therefore, the battery's ability to withstand vibration, shock, expansion, and the like is improved, especially the ability to withstand an expansion force of the battery cell 104 in an extension direction of the bead 107.

In some embodiments, as shown in FIG. 2, FIG. 4, FIG. 7 and FIG. 8, the bead 107 includes a bead main body part 1071 and a bead connecting portion 1072 arranged at at least one end of the bead main body part 1071. The bead connecting portion 1072 includes a lapping portion 1072a and a connecting head 1072b. The bead connecting portion 1072 is connected to one end of the bead main body part 1071 at the lapping portion 1072a and to the first beam 1031 and/or the second beam 1032 at the connecting head 1072b.

The detailed structure of the bead 107 is further explained with reference to FIG. 7 and FIG. 8.

As a specific example, the bead main body part 1071 is configured as a strip in the first direction X and has a substantially uniform width (the dimension in the second direction Y) over its entire length. Here, a cross-section of the bead main body part 1071 may be in a quadrilateral shape such as a triangular shape, a rectangular shape, and a square shape, or in a polygonal shape, depending on the specific situation. However, from the perspective of increasing contact areas with the first shoulder 1047 and the second shoulder 1048, and facilitating stress transfer and reducing stress concentration, a flat rectangular cross-sectional shape may be adopted.

At least one end of the bead main body part 1071 is provided with a bead connecting portion 1072. When only one end is provided with the bead connecting portion 1072, the end portion of the bead main body part 1071 that is not provided with the bead connecting portion 1072 may be directly connected to the first beam 1031 or the second beam 1032. When both ends are provided with the bead connecting portion 1072, the two bead connecting portions 1072 are connected to the first beam 1031 and the second beam 1032, respectively. When the bead 107 is connected to the first beam 1031 and the second beam 1032, the bead main body part 1071 in the bead 107 contacts with a surface of the third shoulder (i.e., the first shoulder 1047 and the second shoulder 1048) and is bonded and fixed to the surface of the third shoulder.

The bead connecting portion 1072 includes a lapping portion 1072a and a connecting head 1072b. The lapping portion 1072a is connected to the bead main body part 1071 in a state where it overlaps and is in surface-contact with the end portion of the bead main body part 1071 within a certain length range. As an example of a connection method, as shown in a welding portion 1072d in FIG. 8, the connection is achieved by welding at plurality of positions (e.g., a plurality of positions that are generally evenly distributed) within an overlapping area. This connection method helps firmly connect the bead connecting portion 1072 to the bead main body part 1071, and helps evenly transmit the stress generated when subjected to an expansion force in the length direction of the bead 107 to the first beam 1031 and the second beam 1032.

In addition, the connecting head 1072b and the lapping portion 1072a are integrally formed, but the width of the connecting head 1072b (the dimension in the second direction Y) is larger than the width of the lapping portion 1072a (the dimension in the second direction Y), so that it is capable of being firmly connected to the first beam 1031 and the second beam 1032, and is not prone to breakage, tearing, or other defects. Furthermore, the connecting head 1072b is provided with, for example, two elongated hole portions 1072c. The elongated hole portion 1072c is fixedly connected to the first beam 1031 and the second beam 1032 by bolts or rivet nuts. By providing the elongated hole portion 1072c, a dimensional deviation between a distance between the first beam 1031 and the second beam 1032 (e.g., a distance in the first direction X) and the length of the bead 107 is tolerable. A small amount of deformation in the length direction of the bead 107 (the distance in the first direction X) is also tolerable, thereby reducing the possibility of breakage, tearing, and the like caused by excessive stretching of the bead 107.

The first elongated component such as the bead 107 is connected to the first beam 1031 and the second beam 1032 through the connecting head 1072b, and therefore, it is capable of reducing the connection strength, and reducing the risk of the first elongated component tearing due to stress concentration.

In addition, in some embodiments, the first elongated component includes an elongated component made of a steel strip. Of course, the first elongated component may also be formed using other suitable materials.

The elongated component made of the steel strip has a high impact strength, tensile strength, and the like, which helps improve the mechanical strength of the battery to withstand vibration, impact, expansion, and the like.

In some embodiments, the surface of the first elongated component has an insulating film or insulating coating.

The surface of the first elongated component has the insulating film or insulating coating, and therefore, it is capable of being insulated relative to the first shoulder, the second shoulder, and the like of the battery cell.

In some embodiments, as shown in FIG. 2 and FIG. 4, the elongated component further includes a second elongated component that is different from the first elongated component, the first elongated component and the second elongated component extending in the same direction.

In the examples shown in FIG. 2 and FIG. 4, a brace 108 is used as the second elongated component. In the following, a detailed structure of the brace 108 is further explained with reference to FIG. 9 and FIG. 10.

As a specific example, the brace 108 is configured as, for example, a strip, a cross-section thereof may be in a quadrilateral shape such as a triangular shape, a rectangular shape, and a square shape, or in a polygonal shape, depending on the specific situation. In an example shown in FIG. 9, the brace 108 is configured such that a brace end face 1081 has a protrusion in the middle. Such a shape is beneficial for improving the ability to withstand tensile force in the length direction or for improving tensile strength. Of course, the brace end face 1081 may also adopt the shape of an overall "U" shape as shown in FIG. 10.

The battery pack 100A may include one brace 108 or a plurality of braces 108. The brace 108 is, for example, bonded to the surfaces of both the first shoulder 1047 and the second shoulder 1048, or the first shoulder 1047 and the second shoulder 1048 in the third shoulder. The bead 107 and the brace 108 may be alternately arranged in a plurality of third shoulders. The alternate arrangement here includes a case of repeated arrangement of one bead 107 and one brace 108 as a unit, and also a case of repeated arrangement of several beads 107 and several braces 108 as a unit.

In addition, a third elongated component that is different from both the first elongated component and the second elongated component may further be included.

The second elongated component is also connected to the surface of the battery cell row, thus also improving the rigidity of the battery cell row and increasing the battery's resistance to vibration and impact. In addition, the elongated component may include the first elongated component and the second elongated component, and therefore, the mechanical strength requirements, overall battery weight requirements, cost requirements, and the like can be met by setting the two elongated components in different forms and flexibly combining them. This is beneficial to take into account the above three requirements in a simple way.

In some embodiments, the first elongated component and the second elongated component are made of different materials and/or in different dimensions.

By configured the first elongated component (e.g., the bead 107) and the second elongated component (e.g., the brace 108) to be of different materials, the advantages of both materials can be comprehensively exploited. For example, the first elongated component (e.g., the bead 107) may be made of a material that has a high capacity to withstand tensile and shear forces, while the second elongated component may be made of a material that has a high capacity to withstand tensile forces but also has other advantages such as light weight and/or low cost.

In some embodiments, the second elongated component includes an elongated component made of a fiber-reinforced resin composite material.

As a fiber-reinforced resin composite material, commercially available products may be used, for example, fiber-reinforced resin composite materials with fibers such as carbon fiber and glass fiber.

The second elongated component (the brace 108) made of the fiber-reinforced resin composite material has an excellent tensile strength, which helps improve the ability of the box body of the battery, and even the entire battery, to withstand the expansion force of the battery. As shown in FIG. 2 and FIG. 4, the two end portions of the brace 108 are close to the first beam 1031 and the second beam 1032 with gaps therebetween, which helps the brace 108 exert its tensile strength.

The elongated component made of the fiber-reinforced resin composite material is advantageous in lightweight, which helps reduce the overall weight of the battery while maintaining its overall mechanical strength. In addition, the elongated component made of the fiber-reinforced resin composite material has an excellent tensile strength, which helps improve the mechanical strength of the battery to withstand the expansion force.

As a specific example, when the first elongated component (the bead 107) is made of, for example, the steel strip and the second elongated component (the brace 108) is made of, for example, the fiber-reinforced resin composite material, the abilities of the two elongated components to withstand vibration, impact, and expansion force may be combined, and the characteristic of lightweight of the component made of the composite material may also be utilized, thereby helping reduce the overall weight of the battery. Of course, the materials of the first elongated component and the second elongated component may also be another combination.

In addition, the first elongated component (e.g., the bead 107) and the second elongated component (e.g., the brace 108) may also be configured to be made of a same material but in different dimensions. The dimensions here include at least one of the following: a length dimension (e.g., the dimension in the first direction X), a width dimension (e.g., the dimension in the second direction Y), and a thickness dimension (e.g., the dimension in the third direction Z). In the specific examples shown in FIG. 2 and FIG. 4, the bead 107 and the brace 108 have different length dimensions and width dimensions.

Of course, this is just a specific example. The dimensions, materials, and other settings of the first elongated component and the second elongated component are not limited to the specific example and may be set according to specific circumstances.

Therefore, by setting the first elongated component and the second elongated component to be made of different materials and/or have different lengths, the overall weight of the elongated components can be reduced while taking the mechanical strength into account, thereby reducing the overall weight of the battery and also helping reduce the cost of the elongated components.

In some embodiments, as shown in FIG. 2 and FIG. 4, the first elongated component and the second elongated component are arranged alternatively in the third direction Z, or the first elongated component and the second elongated component are arranged symmetrically about an axis of symmetry in the first direction X.

In the examples shown in FIG. 2 and FIG. 4, in the second direction Y, there are three groups with two columns of battery cell rows as a group. The bead 107 serving as the first elongated component is arranged on the third shoulder (the first shoulder 1047 and the second shoulder 1048) between adjacent groups; and the brace 108 serving as the second elongated component is arranged on the third shoulder (the first shoulder 1047 and the second shoulder 1048) between two columns of battery cell rows in each group. This configuration helps improve the overall mechanical strength of the battery and can reduce its weight.

Of course, the configuration shown in FIG. 2 and FIG. 4 is just a specific example, and the first elongated component and the second elongated component may also be arranged in other forms.

Arranging the first elongated component and the second elongated component alternately in the second direction Y (the direction in which the battery cell rows are stacked sequentially) helps enhance the overall mechanical strength of the battery. Arranging the first elongated component and the second elongated component to be symmetric in the first direction X (the direction in which the battery cells are arranged into the battery cell row) helps uniformly enhance the overall mechanical strength of the battery.

Some specific examples of the present disclosure are described below.

As shown in FIG. 2 and FIG. 4, the overall structure of the battery pack 100A mainly includes a bottom plate 101, a water-cooled plate as a heat exchange plate 102, a box body (frame 103), a battery group, a water-cooling connecting pipe 105, an electrical connection copper-aluminum bar as a busbar component 106, a bead 107 as a first elongated component, a brace 108 as a second elongated component, a BMS assembly 109, a high-voltage box assembly 110, an electrical plug-in portion 111, and a cover 112 as a top cover assembly. The battery group is assembled by connecting a plurality of battery cells 104 in series and parallel combinations.

As shown in FIG. 2, FIG. 4, and FIG. 5, the box body (the frame 103) is mainly composed of a border 1033 as an outer frame, and a first beam 1031 and a second beam 1032 as inner crossbeams. There are no longitudinal beam connecting the two inner crossbeams, and an internal space (a battery cell accommodating space S) is used to place batteries, thereby maximizing the space utilization. The water-cooled plate is placed at the bottom of the box body and is fixed to the border and inner beams of the box body by welding or bolts.

As shown in FIG. 3, the battery cell 104 is provided with a battery cell large surface 1041, a battery cell side surface 1042, a battery cell bottom surface 1043, and a battery cell shoulder (a first shoulder 1047 and a second shoulder 1048).

As can be seen from FIG. 1 to FIG. 4, the battery pack 100A is formed by tightly connecting the battery cell large surfaces 1041 and the battery cell side surfaces 1042 to form a battery group, which is then placed inside the box body (the frame 103). The battery cell bottom surface 1043 is bonded and fixed to the water-cooled plate through a thermally conductive structural adhesive for heat transfer, thereby achieving cooling of the battery cell bottom surface.

As shown in FIG. 4, a bead 107 and a brace 108 are placed on top of the battery group. Bottoms of the bead 107 and the brace 108 are bonded to the battery cell shoulders (both the first shoulder 1047 and the second shoulder 1048) with structural adhesive, thereby playing the role of fixing the battery cell 104, which can improve the rigidity of the battery group and increase the battery pack's ability to withstand vibration and impact. Two ends of the bead 107 are connected to the first beam 1031 and the second beam 1032, as crossbeams inside the box body, by means of bolts or rivet nuts, so as to withstand the expansion force of the battery cell. The bead 107 is made of a high-strength steel strip material, and the surface is insulated with a hot-pressed insulating film or an insulating spray coating to protect the battery cell shoulders. The brace 108 is made of a high-strength composite material. Considering the stress on the box body, the overall cost, and the weight, the bead 107 is preferably placed at 1/3 and 2/3 of the length of the first beam 1031 and the second beam 1032, which serve as the crossbeams inside the box body, and the brace 108 is placed at another position. Depending on strength requirements of various battery packs, the positions and numbers of the beads 107 and braces 108 may be adjusted to minimize the weight and cost of the battery pack while meeting the strength requirements.

In addition, as shown in FIG. 6, if there are concerns that the strength requirements of the battery pack may not be met by the bead 107 and the brace 108 due to the large volume or weight of the battery pack, or if there are requirements for mounting points between the two inner crossbeams, a crossbeam or longitudinal beam may be further added between the crossbeams (the first beam 1031 and the second beam 1032) inside the box body.

In a second aspect, the present disclosure provides an electrical apparatus, and the electrical apparatus includes the battery provided in the first aspect, the battery being configured to provide electrical energy.

For the battery, since it is capable of improving the overall volumetric utilization rate while maintaining the overall structural strength of the battery, it consequently helps the electrical apparatus reduce the space allocated for arranging the battery, decrease the overall weight of the electrical apparatus, or increase the total energy of the battery used by the electrical apparatus so as to extend the charging interval of the electrical apparatus.

The above embodiments are merely used for describing the technical solution of the present disclosure, instead of limiting the present disclosure; although the present disclosure is described in detail with reference to the foregoing embodiments, persons of ordinary skill in the art should understand that they can still make modifications on the technical solution recorded in the above embodiments, or perform equivalent replacements on a part of technical features thereof. These modifications or replacements do not make the essence of the corresponding technical solution depart from the scope of the technical solutions of various embodiments of the present disclosure, and shall fall within the scope of the specification of the present disclosure. In particular, the technical features mentioned in the various embodiments can be combined in any manner as long as there is no structural conflict. The present disclosure is not limited to the specific embodiments disclosed herein, but rather includes all technical solutions falling within the scope of the claims.

## Claims

1. A battery, comprising:
a box body;
battery cell rows each comprising a plurality of battery cells arranged in a first direction, the plurality of battery cell rows being stacked in a second direction to form a battery cell array and placed inside the box body; and
an elongated component, at least one elongated component being arranged on a surface of the battery cell rows on a side away from a bottom plate of the box body in a third direction, and the elongated component extending in the first direction and being connected to at least one battery cell in the battery cell row, wherein the first direction, the second direction, and the third direction are perpendicular to one another.

2. The battery according to claim 1, wherein each of the battery cells comprises a first shoulder and a second shoulder, the first shoulder and the second shoulder being located on a surface of a side of the battery cell having an electrode terminal and on both sides of the electrode terminal, and the elongated component being connected to the battery cell at the first shoulder and/or the second shoulder of the battery cell.

3. The battery according to claim 2, wherein:
in each of the battery cell rows, the first shoulders are connected in sequence, and the second shoulders are connected in sequence; and
the battery comprises the elongated component connected to the first shoulder of each of the battery cells in the battery cell row, and/or the elongated component connected to the second shoulder of each of the battery cells in the battery cell row.

4. The battery according to claim 3, wherein the plurality of battery cell rows comprise a first battery cell row and a second battery cell row that are adjacent to each other in the second direction, wherein the first battery cell row and the second battery cell row are close to or in contact with each other in the second direction, and the first battery cell row and the second battery cell row together form a third shoulder, wherein:
the third shoulder comprises the sequentially connected first shoulders of the first battery cell row and the sequentially connected second shoulders of the second battery cell row adjacent to the first battery cell row; and
the elongated component is connected to both the first shoulders and the second shoulders in the third shoulder.

5. The battery according to any one of claims 2 to 4, wherein the connection comprises bonding.

6. The battery according to any one of claims 1 to 5, wherein in each of the battery cells, sidewalls vertical in a third direction are formed at end edges of the first shoulder and the second shoulder at sides close to each other, and the sidewalls are respectively used to define a boundary of the first shoulder and the second shoulder.

7. The battery according to any one of claims 1 to 5, wherein in the third direction, a height of the battery cell at the first shoulder and the second shoulder is less than a height of the battery cell at the electrode terminal.

8. The battery according to any one of claims 1 to 7, wherein the box body comprises a frame, wherein beams extending in a same direction are provided in a space enclosed by the frame, and each of the battery cell rows is accommodated in the battery cell accommodating space enclosed by the frame and the beams.

9. The battery according to claim 8, wherein:
the beams comprise a first beam and a second beam, the first beam and the second beam being arranged in parallel; and
the elongated component comprises a first elongated component,
wherein two end portions of the first elongated component are connected to the first beam and the second beam, respectively.

10. The battery according to claim 9, wherein the first elongated component comprises a bead main body part and a bead connecting portion provided at at least one end of the bead main body part, the bead connecting portion comprising a lapping portion and a connecting head,
wherein the bead connecting portion is connected to one end of the bead main body part at the lapping portion, and connected to the first beam and/or the second beam at the connecting head.

11. The battery according to claim 9 or 10, wherein the elongated component further comprises a second elongated component that is different from the first elongated component, the first elongated component and the second elongated component extending in the same direction.

12. The battery according to claim 11, wherein the first elongated component and the second elongated component are made of different materials and/or in different dimensions.

13. The battery according to claim 11 or 12, wherein the first elongated component and the second elongated component are arranged alternately in the second direction, or the first elongated component and the second elongated component are arranged symmetrically about an axis of symmetry in the first direction.

14. The battery according to any one of claims 9 to 13, wherein the first elongated component comprises an elongated component made of a steel strip.

15. The battery according to any one of claims 9 to 14, wherein a surface of the first elongated component has an insulating film or insulating coating.

16. The battery according to any one of claims 11 to 15, wherein the second elongated component comprises an elongated component made of a fiber-reinforced resin composite material.

17. The battery according to claim 1, further comprising a thermal management component, the thermal management component being located on at least one side of the battery cell and configured to perform heat exchange with the battery cell.

18. The battery according to claim 17, wherein the thermal management component located on one side of the battery cell close to the bottom plate in the third direction is configured to perform heat exchange with the battery cell.

19. An electrical apparatus, comprising the battery according to any one of claims 1 to 18, the battery being configured to store or provide electric energy.
